Europäisches Patentamt

European Patent Office

(11) Publication number: **0 092 364**
**A1**

Office européen des brevets

(12) **EUROPEAN PATENT APPLICATION**

(21) Application number: **83302045.6**

(22) Date of filing: **12.04.83**

(51) Int. Cl.³: **B 24 B 9/14,** B 24 B 17/10, C 03 B 33/04, G 02 C 13/00, G 05 B 19/18, G 06 F 15/46

(30) Priority: **14.04.82 GB 8210845**

(43) Date of publication of application: **26.10.83** Bulletin 83/43

(84) Designated Contracting States: **DE FR GB IT**

(71) Applicant: **THE HANWELL OPTICAL CO. LIMITED, Pixmore House Pixmore Avenue, Letchworth Hertfordshire (GB)**

(72) Inventor: **Miles, Albert Leonard, 11 Lapwing Dell, Letchworth Hertfordshire (GB)**
Inventor: **Smith, Nigel Vaughan, Chalverstone House, Chawston Bedfordshire (GB)**

(74) Representative: **Burrows, Anthony Gregory et al, Haseltine Lake & Co. Hazlitt House 28 Southampton Buildings Chancery Lane, London, WC2 1AT (GB)**

(54) **A method of and apparatus for dimensioning a lens to fit a spectacle frame.**

㊄ Trays, each containing either a spectacle frame and a pair of lenses to be preshaped, or a lens template, are taken to a VDU 3 with an IR bar code reading pen 3'. Depending upon the response of a central computer 1 to data fed in by the pen 3' and keyed in by an operator, the tray is then (A) routed directly to a lens edger unit 4, or (B and C) routed indirectly to the unit 4, via either (B) a frame encoder unit 6 which measures and encodes the internal dimensions of a «first-time» frame, or (C) a template encoder unit 7 which measures and encodes the external dimensions of the template. As each tray on route A or B moves towards the unit 4, an edger driving file particular to the frame in the tray is recalled by the computer 1 from a mass data store (2) and modified and the modified file held temporarily in a buffer store 5 until required by the unit 4.

- 1 -

## "A method of and apparatus for dimensioning a lens to fit a spectacle frame"

This invention relates to a method and apparatus for dimensioning a lens to fit a spectacle frame.

Conventionally, spectacle lenses leave the manufacturing line with a circular outline. These lenses must be machined to shape and size before they can be fitted into a spectacle frame. This machining process, called "preshaping", is normally carried out by a spectacle assembling firm and on an "edging" machine.

The preshaping of lenses can be broadly split into two categories, the first of which is the preshaping of those that are required to fit a standard frame, and in this case a library of lens templates is held "in-house" by the assembling firm . These templates are then utilized when the lenses are edged to the required shape and size. The second category is in respect of those lenses that are edged to suit frames for which no standard templates are held. In this case, the firm receives the frames from opticians. In order to edge the lenses for these "first time" frames, a unique template is manufactured for each individual frame.

In both cases prescriptions are delivered to the firm from the opticians. The prescription specifies the lens itself and also how far the optical centre has to be offset from the geometric centre.

Firstly, the uncut lenses are selected from stock. Under the existing system the geometric centre of the lens is marked along an axis. The geometric centre is located manually by measurement of the lens. Once the geometric centre has been specified along its axis, a device known as a focimeter is employed to mark the optical centre, which is normally displaced from the geometric centre; this displacement is known as the decentration. The placing of the optical centre is carried out by visual identification of the decentration.

The decentration, which is normally about 1mm or 2mm from the geometric centre, is either to the left-hand-side, or the right-hand-side of the geometric centre, depending on which of the two lenses is being marked. A further mark is made on the lens, and this depicts the side of the lens closest to the nose.

Later in the process the marked lines and points are used as reference points for attaching a rubber sucker to the back of the lens. This sucker is used to position and hold the lens during the machining. The lines appearing on the lens are approximately 0.5 mm thick, and this may lead to errors in the accuracy of setting the sucker on the back of the lens.

Where first-time templates are required, each individual frame is taken by an operator and clamped in a jig as accurately and firmly as possible. This process is carried out entirely manually and the accuracy of the clamping process is, therefore, subject to error. The completed jig is then attached to a cutting machine, which produces templates from uncut blanks. As the clamped unit revolves, a probe runs around the inside of the frame. This probe is mechanically linked to a cutter head that cuts the blanks to the required shape and dimensions. One of the major problems with this system is that the force of the probe on the frame tends to make the frame bend or slip in the clamps, and this produces an inaccurately cut template. This problem is particularly manifest where frames are either old, or made of flexible and/or a number of different materials. In extreme cases the template must be manufactured entirely manually.

After first time templates have been cut, or standard templates drawn from the stock, the lenses themselves can be preshaped. Each lens is firstly lined up along its datum line. After this a rubber sucker is affixed to the surface in correct alignment with the datum and the optical centre. The rubber sucker has an attachment on its reverse side that links the lens to a shaft in the edging machine. At the other end of the shaft the template for the lens is attached. Each of the templates has a number of holes that run along the datum, and it is through these holes that the template is attached to the shaft. Both the template and the lens are attached to the shaft according to their nose positions. As the shaft revolves the movement of the template dictates the movement of the lens as it is presented to the cutting heads.

There are in general only two different materials used for lenses, glass and plastics. The lens edging machines have to be fitted with the correct edging wheels for the lens material. The process of changing the wheels is quite lengthy and a particular machine tends to be used exclusively for edging glass lenses or exclusively for edging plastics lenses, although by changing the edging wheels the machines can be used for either. On most machines there are a pair of cutting wheels. The first wheel is used for an initial rough cut, and the second wheel for a final finishing cut. During rough cutting the lens is oscillated, in preference to continuous revolution, but during fine cutting the shaft is revolved continuously.

One of the major problems with the current system is that cumulative errors occur prior to the actual edging process, and these combined errors account for 95% of the scrap lenses produced.

It is known to employ bar code readers for progressing jobs through the spectacle assembling firm. The information read by these is forward to a computer installation that supplies "work-in-progress" information. Where jobs are proceeding through the system, the bar codes are provided on the trays, in which the jobs are carried; i.e., documentation, frame and lenses are located in the trays, but referenced by the code.

- 4 -

According to one aspect of the present invention, there is provided a method of dimensioning a lens to fit a spectacle frame, comprising obtaining from a store a representation of the internal dimensions of a spectacle frame, and utilizing said representation in controlling the operation of a lens dimensioning device, characterized in that said representation comprises data in the form of an electrical signal.

According to another aspect of the present invention, there is provided apparatus for dimensioning a lens to fit a spectacle frame, comprising storing means from which can be obtained a representation of the internal dimensions of a spectacle frame, and a lens dimensioning device for operation utilizing said representation, characterized in that said storing means comprises data storing means and said apparatus further comprises electrical means arranged to obtain said representation from said storing means as data in the form of an electrical signal and to utilize said signal in controlling the operation of said device.

According to the present invention, it is possible to reduce the amount of manual operation required, so reducing the staff required to operate the preshaping process, and to reduce significantly the the quantity of scrap lenses produced by the preshaping, so further reducing the cost of the preshaping.

In order that the invention may be clearly understood and readily carried into effect, reference will now be made, by way of example, to the accompanying drawings, in which:-

Figure 1 shows diagrammatically a system for preshaping spectacle lenses,

Figure 2 shows diagrammatically software thereof employed in routeing trays,

Figure 3 shows diagrammatically software thereof employed in lens edging,

Figure 4 shows diagrammatically software thereof employed in operation of encoder units,

Figure 5 shows diagrammatically a measuring device thereof,

Figure 6 shows diagrammatically hardware of one of the encoder units, and

Figure 7 shows diagrammatically hardware of a lens edger unit.

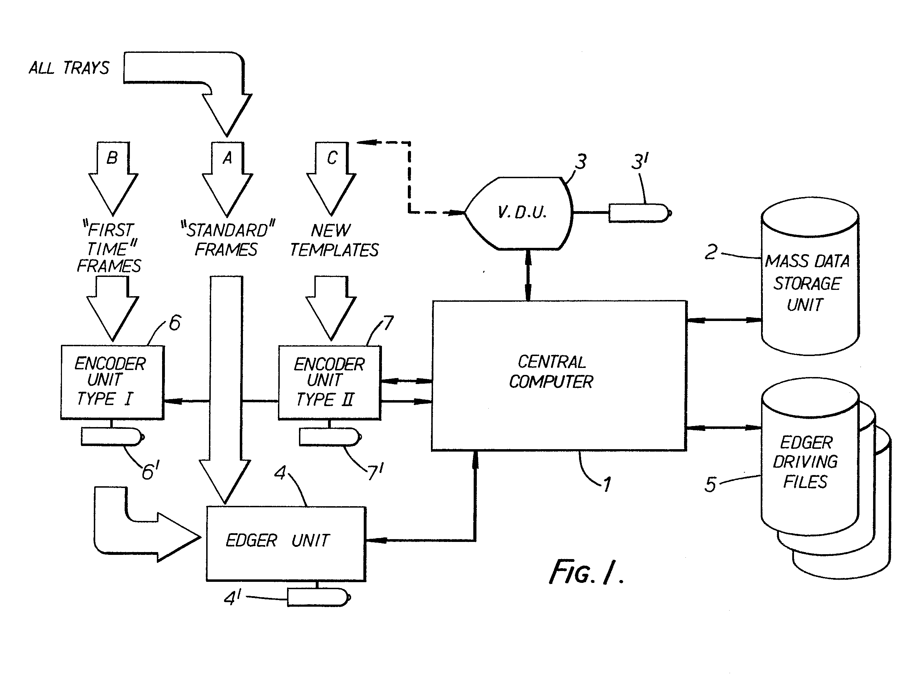

Referring to Figure 1, the system replaces the existing system of producing plastics templates, by using electronically generated substitutes to supply the instructions necessary to machine the lens to the desired dimensions. At the same time, the system reduces the complexity of the task of aligning the lens holding sucker with the decentred optical centre, by semi-automating the process. The system is based upon a central computer 1 and a mass data storage unit 2 to which are connected a number of specialized peripheral devices.

Figure 1 shows the flow of work and information in the system, the flow of work trays being shown by broad arrows and the flow of information by narrow arrows.

Each tray entering the system will fit into one of three categories A to C, and these different categories are derived from the trays' contents. The categories are as follows:

A) A "standard" spectacle frame for which the encoded dimensions are already stored in the unit 2.

B) A "first time" frame for which the dimensions are not yet included in the unit 2.

C) A plastics template of the lens shape for a new type of frame which a frame supplier is producing.

At the beginning of the preshaping procedure every tray is first taken to a VDU (visual display unit) 3 which has an IR (Infra-Red) bar code reading pen 3' attached to it. The VDU operator uses the pen 3' to read in the code, and the computer 1 responds by displaying the tray number. The operator checks this number against the number on the tray, and if they match presses a key to accept it. The computer then demands the name and supplier of the frame or template. When the operator has typed this in, the computer requests the prescribed decentration, or template code. If the tray contains a spectacle frame, the VDU operator types in the decentration: however, if the tray contains a template the operator types in a code to indicate this.

On the basis of this input the computer 1 can decide whether the frame's dimensions are in its unit 2 or not. The trays are then routed according to whether they contain a standard frame, a first time frame or a template.

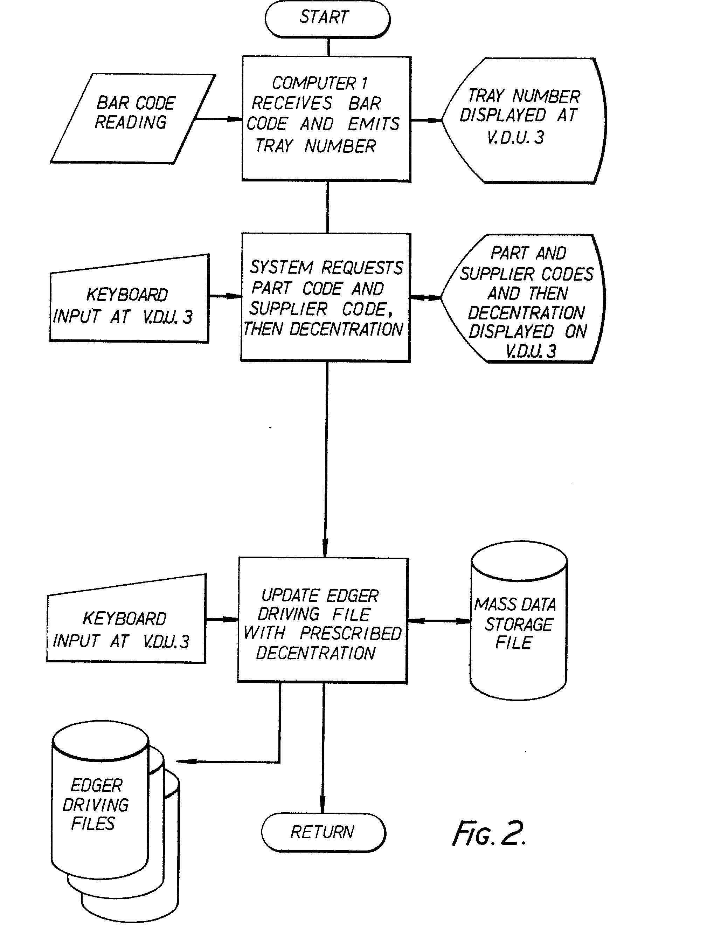

The software for this part of the system can be seen in Figure 2. A number of broadblock software diagrams are used in the drawings. The rectangular boxes represent a process, the diamonds a decision, the drums are files, and the others are as labelled. A manual input at a keyboard or front panel is represented by a half trapezium, and other forms of input/output are shown as parallelograms.

Standard Frame Route

Each tray containing a particular standard frame is sent from the VDU station to join the queue to be processed on an automatic edger unit 4. The computer 1 recalls from the unit 2 the file containing the dimensions of a particular standard frame, copies it and applies the prescribed decentration to the data. This creates a file of instructions which will eventually be used to drive the edger unit 4. The computer 1 then returns the original file to the unit 2, unchanged. The computer affixes the number of the tray which contains the frame and lenses to the modified "edger driving" file, and then stores this file in a waiting area 5.

When the tray reaches the edger unit 4, the operator uses an IR pen 4' attached to it to read in the tray number. The edger unit responds by displaying the tray number on an LED (light-emitting diode) display; if this matches the number on the tray the operator presses a button to accept it. The operator then loads the lens into the edger unit 4. While the lens is being loaded, the unit 4 transmits the tray number to the computer 1, and the computer replies by "down-line-loading" the relevant "edger driving" file into the edger unit's memory. When the edger unit has loaded this data it cuts the lens to the given dimensions.

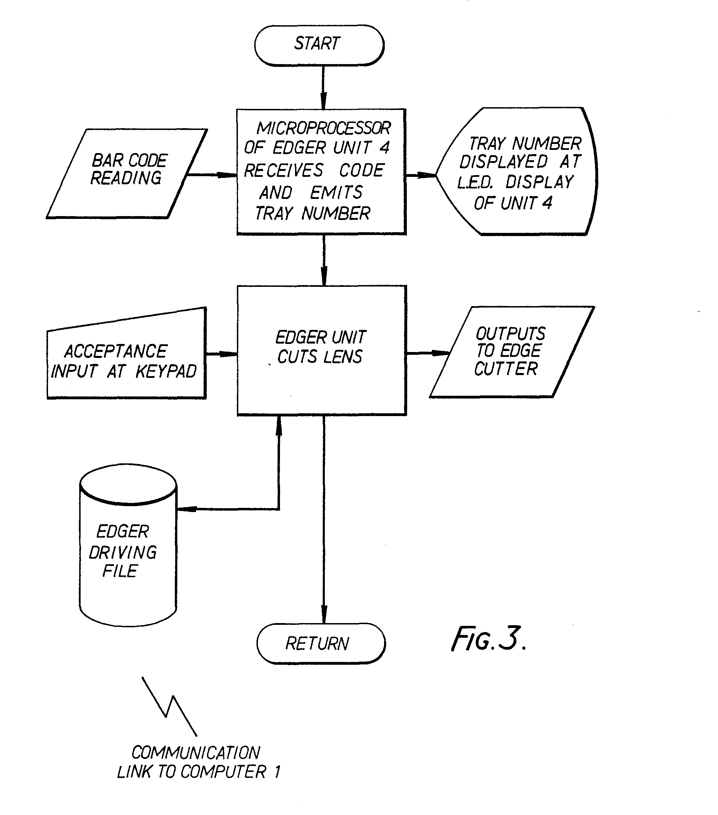

A software flowchart illustrating this part of the system may be seen in Figure 3.

First Time Frame Route

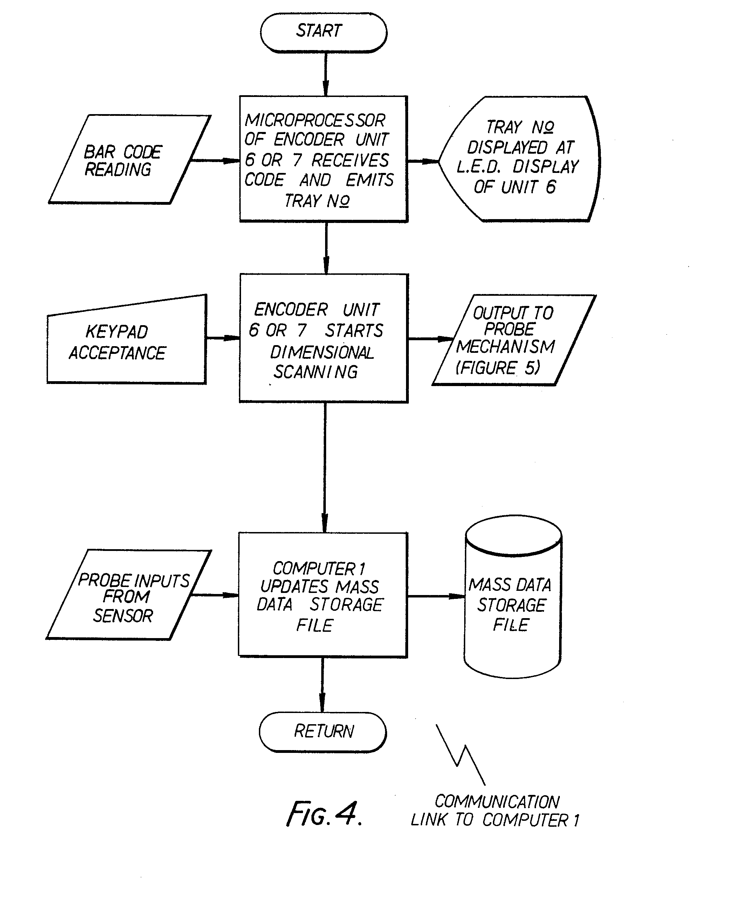

If the computer tells the VDU operator that a particular frame is "first time", i.e. its dimensions are not yet stored in the unit 2 then the tray is sent to an encoder, the type I encoder unit 6 in Figure 1. When the tray arrives at the encoder unit 6, the operator uses an IR bar code reader 6' to input the tray number. When the code number has been verified and accepted by the operator from an L.E.D. display of the unit 6 the frame is clamped to the encoder unit and its dimensions measured in a manner which will be described hereinafter with reference to Figure 5. When the encoded dimensions have been received by the computer 1, a new file is created to hold them and stored in the unit 2. This file is identified by the name of the frame and the name of its supplier. This ensures that if the same type of frame enters the system again it will take the standard frame route and not need to be sent to the encoder unit 6. A copy of the new file is modified by the prescribed decentration, which was input at the VDU, to create an "edger driving" file. The computer then affixes the tray number to this file. The "edger driving" file for the first time frame is then put into the waiting area 5. The software for this part of the system can be seen in Figure 4.

The tray containing the first time frane can then join the same queue for the edger unit 4 as the standard frames, whereafter the procedure is identical to that for standard frames (see Figure 1).

Frame Template Route

After the name of a new spectacle frame template has been entered at the VDU 3, the tray containing the template is sent to a type II encoder unit 7 (see Figure 1). The encoder unit operator again uses an IR pen 7' to read the bar code on the tray. Once this code has been verified and accepted by the operator from an L.E.D. display of the unit 7, the template is clamped onto the encoder unit 7. The template dimensions are then measured in much the same way as frame dimensions are measured.

When the encoded dimensions are received by the computer it stores them in the unit 2 in a file under the template name which was input at the VDU 3. The newly

- 8 -

created file can then be accessed in the same way as the existing files, and the plastics template can be discarded.

It will therefore be understood that the system has five basic items:

(1)  A central computer, which stores the dimensions of frames in its memory and is able to recall and modify them as instructed.

(2)  One or more frame encoding stations at which respective units 6 measure the dimensions of spectacle frames and render them into a digital form.

(3)  One or more template encoding stations, very similar to (2), except that their respective units 7 measure the external dimensions of templates rather than the internal dimensions of frames.

(4)  One or more lens edging stations at which respective units 4 would cut the lenses according to the dimensions transmitted from the computer.

(5)  A VDU which would be a standard industrial VDU with an IR bar code reader attached.

Of the specialized peripheral items, the lens edging stations contain microprocessor based control devices. Whether or not items (2) and (3) (the encoder units) would require microprocessor based control devices would depend on how many of the encoder units were to be connected to the central computer. If only two or three encoder units are required in the system it would be quite possible to put these under the direct control of the central computer. However, if more encoder units are required it would be necessary for the units to have some processing power and intelligence, and hence they would need to have their own microprocessor control devices.

As probably 75 to 80% of lenses edged would be cut to fit standard frames, once the dimensions of all the common families of frames had been encoded and stored, the template encoder unit would not be needed that often. Therefore, there can be provided a dual purpose encoder unit which could encode both frames and templates.

With the exception of the VDU, each of the items referred to above will now be described in more detail.

Frame Encoder Unit:

(a) Intelligent Encoder

If a large number of encoding stations are used in the system then each encoding station must have sufficient intelligence to measure the dimensions of a spectacle frame, organize this information into a computer "file", and transmit it to the central computer.

So that the encoding station can carry out these functions it has a microprocessor based control unit which controls a stepping motor. It is also able to read in the values presented to it from a linear position transducer, place beginning and end of file markers at the ends of the completed dimension information, and transmit this information to the central computer.

(b) Non-Intelligent Encoder

This would be virtually identical to the intelligent encoder described above, the difference being in the way in which this station communicates the measured dimensions of the spectacle frames to the central computer. The control unit of this station would contain fairly simple circuitry. It would receive its instructions directly from the computer and transmit the encoded dimensions back as it read them in. The computer would deal with the organization of this information into a file.

In both cases, no matter whether the encoding station is intelligent or non-intelligent, the mechanical and transducer systems will be identical.

(c) Mechanical and Transducer Systems

There are a number of possible ways of measuring the dimensions of the frames. Firstly, it is possible to measure the dimensions of the frames by shining a beam of collimated light through the frames and encoding the frame shape from the shadow it casts on a photo-sensitive array. This system would be quite expensive to implement, but would allow the very fast encoding of frames, and this, coupled with extremely low clamping forces applied to the frames, would be a positive advantage.

However, this type of system relies upon the lens holding grooves around the inside of the spectacle frames being of consistent depth. If the depth is consistent, it is possible to add the depth to the dimensions encoded from the photo-sensitive array. This would give the dimensions of the lens that would fit in a particular frame. However, the depth of the groove often varies around the circumference of the frame, so that to use this kind of system to encode the dimensions of frames it would be necessary to use a penetrating radiation, such as X-rays, rather than light. However, the use of penetrating radiation presents formidable technical and safety problems.

The internal dimensions of the frame are preferably measured by a linear transducer of which a probe 8 would be spring-loaded against the base of the groove in the frame 9 (see Figure 5). A stepping motor would rotate a radial arm 10, to which the transducer would be attached, within the spectacle frame 9 in three degree steps. At each of these steps the transducer's output would be monitored.

The linear transducer itself is of the potentiometer type and the spring loading force against the frame can be adjusted to the minimum force which still allows the probe 8 to follow the frame's contours. Using this system the forces applied to the frame would be far less than those applied in the conventional system and so the frame would be less susceptible to distortion and the dimensional inaccuracies that this causes. However, it must be borne in mind that the force needed to maintain contact between the tip of the probe 8 and the frame 9 will increase with speed.

As a spectacle frame extends three dimensionally, the linear transducer is free to move vertically to follow accurately the curve of the frame 9. The movement in this third dimenson need not be measured, but the free movement must not cause inaccuracies in the position of the sensor or in its radial measurement.

The probe 8 itself has a tip of a very small diameter to minimise errors on small radius corners. In addition to this, the tip is made of material hard enough to resist wear as it is rubbed along the groove. The linear potentiometer transducer would have an output of 0 volts at the beginning of its travel and 2.1 volts at its full extension.

The radial arm 10 is rotated by a stepping motor, via a reduction gearbox. If a three-phase motor is used, a 60:1 ratio gearbox is used to reduce the 120 degree steps of the motor to the 3 degree steps needed for the transducer arm. The motor can be run under closed loop control, where its position is continuously relayed back to the control unit for comparison with its intended position. However a cheaper alternative is to run it under open loop control, i.e. without feedback. As a safety measure, the motor could be recalibrated after each lens has been encoded. This can be achieved through the incorporation of a simple magnetic, or optical, sensor which detects when the motor is at some predetermined calibration, or "home", point. After each encoding sequence the motor would be instructed to return to this point. If the sensor reports that it has returned, then all is well, and the next lens can be encoded, but if the sensor indicates that the motor has not returned to its calibration point, this means that it has dropped a step and is no longer accurate. When this happens the motor is rotated until the sensor detects the home point again; the control system then uses this reference point to recalibrate the motor, so that it is accurate for the next encoding sequence. An intelligent control system can be programmed to note the number of times the motor slips out of calibration in a day, and to inform the operator if this is occurring more than an acceptable number of times per day.

The encoder unit has a clamping arrangement for the frame. However, as the forces applied to the frame by the transducer will be far less than the forces conventionally applied, the clamps do not need to apply the same force and it may only be necessary to clamp the frame on the bridge. This should greatly reduce the chances of the frame being distorted by clamping forces.

## (d) Electronic Hardware of Intelligent Encoder

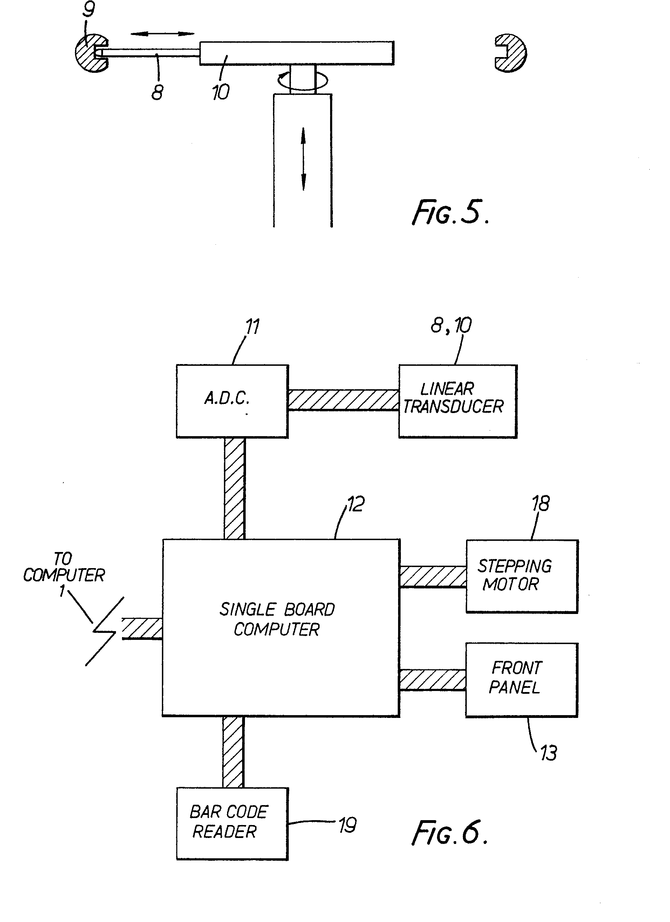

A resolution of 0.1mm is probably sufficient for the encoder. This resolution can be achieved by having an 8 bit ADC (Analogue to Digital Converter).referenced 11 in Figure 6. This type of ADC gives an output where an increase of 1 in the binary number corresponds to 0.01 of a volt. To give the required resolution, a change of 1 mm. in the position of the transducer probe 8 gives a change in output of 0.1 volts.

As well as the ADC 11, the electronic hardware of the encoder unit would consist of a conventional microcomputer board 12 to control the operations of the unit and connected to the computer 1, and a standard stepping motor controller board for the stepping motor 18. In addition some simple circuitry would be needed to drive a four-digit display 13 which shows the operator the tray number for confirmation.

Once a file of frame dimensions has been completed, the tray number of the frame, which has been read in with the IR pen of the bar code reader 19, will be attached to the file, and the whole file transmitted to the central computer 1.

## (e) The Software of the Intelligent Encoder

The primary functions of this software are to read in the transducer input and put it into random access memory, to read in, and verify, the tray number, append this to the dimensional data, and output the completed file _via_ the serial interface. Figure 4 shows the software for the operation of the encoder units.

## Non-Intelligent Encoder

The mechanics of a non-intelligent encoder would be identical to those of the intelligent encoder, but the only similarities in the control systems electronics would be that both systems would have an ADC and a stepping motor controller. Communication between the central computer 1 and the non-intelligent encoding station is in a parallel mode. The output of the ADC is connected to buffers which hold the data until the central computer reads it. When the computer has read the data it will output signals to inform the encoder that it has done so,

- 13 -

and that the next measuring point can be moved to. In addition to these signals, the encoder puts up a flag, a single bit of binary data, which prevents the central computer interrogating it until it has reached the next measuring point. The electronic circuitry needed to implement these functions is not particularly sophisticated, and may be fitted on one circuit board. In addition some interface circuitry is provided so that the input of the IR pen is sent directly to the central computer. The same interface could be used by the computer to display the tray number at the encoder's front panel for the operator to verify.

Template Encoder Unit

The electronic hardware and software of the template encoder unit are very similar to those of the frame encoder, the main differences being in the mechanical system. To encode the external dimensions of a template demands a different sensing system from that required to encode the internal dimensions of a spectacle frame. However, a similar transducer is used in both cases, and so the electronics is identical. Because of this, the same option is available as for the frame encoder; i.e. that of having either an intelligent or a non-intelligent control system.

Alternatively, the dimensions of the template could be encoded using a light beam arrangement similar to that described hereinbefore. This would be technically feasible as the template has no hidden detail, but would still be very expensive.

As already mentioned, another, more economical and attractive alternative, is to have encoder units that are dual purpose and could be quickly adapted to encode either templates or frames. The tip of the sensor would need to be interchangeable so that a tip adapted to roll around the outside of templates could be fitted in place of the tip used for frames. Also, the spring-loading of the sensor would need to be arranged so that it could apply force outwards, for spectacle frames, or inwards, for templates. In addition the encoder unit would need to have

- 14 -

facilities for clamping both templates and frames.
An encoder unit adapted in this way could be fully
utilized, unlike an encoder unit limited simply to encoding
templates.

Lens Edger Unit

(a) Mechanical Hardware

The mechanics of the lens edger unit are very
similar to those of the conventional lens edger, the
differences being in the method of moving the lens-carrying, horizontal
shaft in a vertical plane relative to the edging wheel(s) below it,
and also in the method of driving the shaft itself.

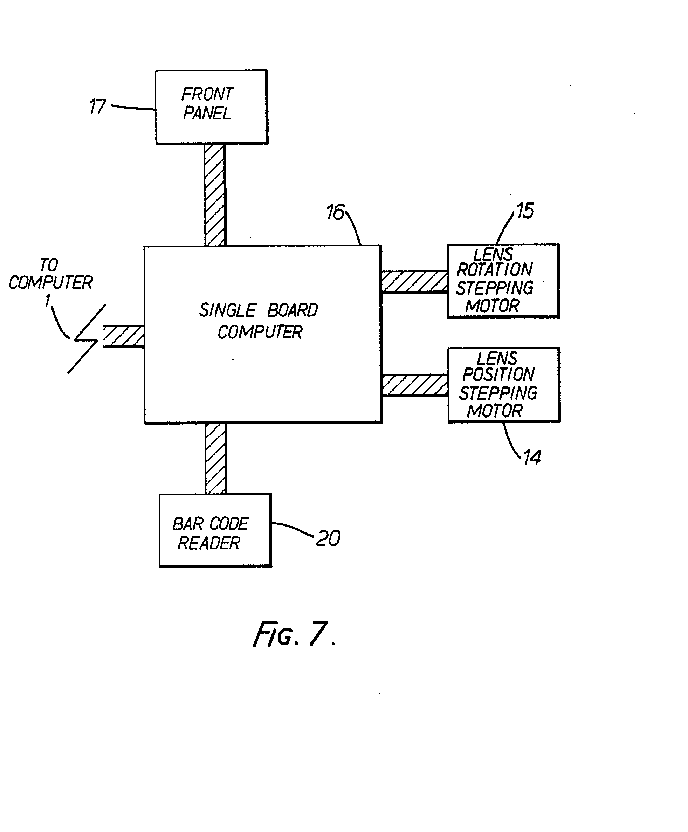

The vertical movement of the shaft is controlled
by a stepping motor 14 (see Figure 7) through a converting
mechanism, such as a rack and pinion, which changes the
rotational movement of the stepping motor 14 into the
linear movement required of the shaft. The vertical movement of the shaft is in discrete steps as the stepping
motor moves in this way; however, the steps can be made
sufficiently small, for instance 0.05mm, so that the
finished edge of the lens appears to have a continuous
curve.

The rotational movement of the shaft will also
be stepping controlled by a stepping motor 15, via a
reduction gearbox. The reduction in this case is larger
than the 60:1 reduction of the lens encoding station. The
larger reduction allows the curved edge of the lens to be
interpolated between the three degree reference points of
the frame dimension file. A reduction of 720:1, giving
steps of a half of a degree, is sufficient.

The stepping motors 14 and 15 can be used with
closed loop control, open loop control or with the sort
of continuous recalibration system discussed hereinbefore.

Other mechanical parts of the system, such as
cutting wheel motors, lens clamping systems, and coolant
sprays are identical to those on existing lens edgers.

(b) Electronic Hardware

The control functions of the edger unit are
far more complicated than those of an encoder, and so it
is unlikely that the central computer 1 would be able to control the required number of edger units directly if they had non-intelligent control systems. Because of this, an intelligent edger unit    is used and the files containing the lens dimensions are sent to it using a serial transmission method.

The electronic hardware consists of two stepping motor driver boards, a single board based microcomputer 16, which has a serial interface contained on it, and some circuitry to drive a  four digit display 17, via a parallel port.

(c) Software

The software carries out four main functions. The first is to read in the tray number from the IR pen of a bar code reader 20 and transmit it serially to the central computer 1. The central computer retrieves the file with that number from the waiting area 5 and transmits a copy of it to the edger unit.  The software's second job is to load the serial data into the read only memory of the edger  unit.  The third function is to read the tray number attached to the file and display it on the four digit display 17. When the operator has accepted this number the software rotates the lens using the stepping motor 15 and uses the contents of its memory to control the shape of the lens by controlling the second motor 14.

Central Computer

The central computer 1 is a microcomputer with its own peripheral storage facilities.

It would be possible to generate each "edger driving file" from the unit 2 only when the edger driving information is demanded by an edger unit.  However, to use the central computer's time in the most effective manner it is probably best to generate "edger driving files" in advance of when they are needed; this will avoid the computer's response being slowed if a number of edger units demand driving files simultaneously.

If the "edger driving files" for a particular pair of spectacles are prepared in advance of the spectacles reaching the edger and then held in a temporary buffer store, they can be transmitted very quickly when requested

- 16 -

by an edger unit. This allows the computer to carry out the interpolation necessary to generate the "edger driving file" at any time in the period between the tray containing the spectacles leaving the VDU 3 and the same pair arriving at the edger unit, and to schedule this work to the best advantage. It is probably sufficient for the "edger driving file" buffer store 5 to hold enough files to last for 10 minutes.

In this case, if the dimensional information is interpolated at degree steps to an accuracy of 0.05mm then each interpolated "edger driving file" used to control an edger unit will use 0.8K Bytes of storage space. If approximately 40 spectacle frames are processed in the space of 10 minutes, 32K of memory is sufficient to hold this number of files. This quantity of files takes up a very small space compared to the library (the unit 2), and can easily be held on a hard disc unit, along with the library files and the programmes. As the edger driving files are held on the hard disc they can be accessed very quickly and even if a number of edger units demand files at the same time the response of the system probably does not slow noticeably.

A substantial amount of memory space is needed to store the system's programmes. However, if a 5 megabyte hard disc apparatus is used this means that the 2 megabytes remaining after the use of 3 megabytes for library file storage are available for programmes.

Although hard disc apparatus are associated with extremely fast access times, on very rare occasions they may fail catastrophically and their entire contents be lost. Because of this risk, hard disc apparatus are normally used with a slower-access back-up system such as magnetic tape. The entire contents of the hard disc memory are "backed-up" onto the magnetic tape memory at regular intervals. Then, if the hard disc fails, and its contents are lost, once the hard disc fault has been rectified its contents can be "recreated" from the tape back-up. In this case, rather than the whole library being lost, only the files created since the last back-up are lost.

The VDU 3 which is used to enter details of tray contents can also be used to control the operation of the microcomputer 1. It can be used for entering instructions, to edit and erase library files and can also be used to display an index of library files, by frame name or manufacturer as required. It is useful if the software of the system also keeps track of how often each library file was accessed and when it was last accessed. This information could then be displayed on the VDU on demand and files which had remained in the library for a long period of time without being used could be erased to economize on disc space.

-18-

CLAIMS:

1. A method of dimensioning a lens to fit a spectacle frame, comprising obtaining from a store (2,5) a representation of the internal dimensions of a spectacle frame, and utilizing said representation in controlling the operation of a lens dimensioning device (4), characterized in that said representation comprises data in the form of an electrical signal.

2. A method according to any preceding claim, and further comprising, between said obtaining and said utilizing, temporarily holding said data in a buffer store (5).

3. A method according to claim 1 or 2, and further comprising measuring the internal dimensions of a spectacle frame and encoding the same to produce a representation of the same comprised of data in the form of an electrical signal, and utilizing the latter signal to supply the latter data to said store (2) for subsequent recall therefrom.

4. A method according to claim 1, 2 or 3, and further comprising measuring the external dimensions of a lens template and encoding the same to produce a representation of the same comprised of data in the form of an electrical signal, and utilizing the latter signal to supply the latter data to said store (2) for subsequent recall therefrom.

5. A method according to claim 3 or 4, wherein said measuring comprises emitting a beam of radiation transversely to the frame or the template and overlapping the internal periphery of the frame or the external periphery of the template, and determining where the beam is obscured by the presence of the frame or the template.

6. A method according to claim 3 or 4, wherein said measuring comprises causing a probe (8) to ride along the internal periphery of the frame or the external periphery of the template, and determining the movement of the probe (8) owing to the dimensions of that periphery.

-20-

template to produce a representation of the same comprised of data in the form of an electrical signal, said electrical means (1) serving to utilize the latter signal to supply the latter data to said storing means (2) for subsequent recall therefrom.

7.    A method according to claim 6, wherein said probe (8) rides stepwise along said periphery and said measuring is performed at the end of each step.

8.    A method according to any preceding claim, wherein the operation of said lens dimensioning device (4) includes turning said lens stepwise about an axis and displacing said axis stepwise towards and away from a lens edge cutter of said device (4).

9.    A lens dimensioned by a method according to any preceding claim.

10.    Apparatus for dimensioning a lens to fit a spectacle frame, comprising storing means (2,5) from which can be obtained a representation of the internal dimensions of a spectacle frame, and a lens dimensioning device (4) for operation utilizing said representation, characterized in that said storing means (2,5) comprises data storing means (2,5) and said apparatus further comprises electrical means (1) arranged to obtain said representation from said storing means (2,5) as data in the form of an electrical signal and to utilize said signal in controlling the operation of said device (4).

11.    Apparatus according to claim 10, wherein said data storing means (2,5) comprises a mass storing means (2) and a buffer storing means (5) for temporarily holding data obtained from said mass storing means (2) prior to the utilization of that data.

12.    Apparatus according to claim 10 or 11, and further comprising a frame encoding device (6) for measuring and encoding the internal dimensions of a spectacle frame (9) to produce a representation of the same comprised of data in the form of an electrical signal, said electrical means (1) serving to utilize the latter signal to supply the latter data to said storing means (2) for subsequent recall therefrom.

13.    Apparatus according to claim 10, 11 or 12, and further comprising a template encoding device (7) for measuring and encoding the external dimensions of a lens

Fig. 1.

1/6

0092364

0092364

## 2/6

```
                    ┌──────────┐
                    │  START   │
                    └────┬─────┘
                         │
                         ▼
┌────────────┐    ┌──────────────┐    ┌──────────────┐
│  BAR CODE  │───▶│  COMPUTER 1  │───▶│ TRAY NUMBER  │
│  READING   │    │ RECEIVES BAR │    │ DISPLAYED AT │
│            │    │CODE AND EMITS│    │   V.D.U. 3   │
└────────────┘    │ TRAY NUMBER  │    └──────────────┘
                  └──────┬───────┘
                         │
                         ▼
┌────────────┐    ┌──────────────┐    ┌──────────────┐
│  KEYBOARD  │───▶│SYSTEM REQUESTS│──▶│   PART AND   │
│INPUT AT V.D.U.3│ │ PART CODE AND│    │SUPPLIER CODES│
│            │    │SUPPLIER CODE,│    │  AND THEN    │
└────────────┘    │THEN DECENTRATION   │ DECENTRATION │
                  └──────┬───────┘    │ DISPLAYED ON │
                         │            │   V.D.U. 3   │
                         │            └──────────────┘
                         ▼
┌────────────┐    ┌──────────────┐    ┌──────────────┐
│  KEYBOARD  │───▶│ UPDATE EDGER │◀─▶ │  MASS DATA   │
│INPUT AT V.D.U.3│ │ DRIVING FILE │    │   STORAGE    │
│            │    │WITH PRESCRIBED│    │    FILE      │
└────────────┘    │ DECENTRATION │    └──────────────┘
                  └──────┬───────┘
        ┌────────────────┤
        ▼                │
┌────────────┐           │
│   EDGER    │           ▼
│  DRIVING   │     ┌──────────┐       FIG. 2.
│   FILES    │     │  RETURN  │
└────────────┘     └──────────┘
```

**FIG. 2.**

```
              ┌─────────────┐
              │    START    │
              └─────────────┘
                     │
                     ▼
┌──────────────┐  ┌──────────────────┐   ┌──────────────────┐
│  BAR CODE    │→ │  MICROPROCESSOR  │ → │   TRAY NUMBER    │
│  READING     │  │ OF EDGER UNIT 4  │   │  DISPLAYED AT    │
└──────────────┘  │ RECEIVES  CODE   │   │  L.E.D. DISPLAY  │
                  │  AND   EMITS     │   │   OF UNIT 4      │
                  │  TRAY  NUMBER    │   └──────────────────┘
                  └──────────────────┘
                           │
                           ▼
┌──────────────┐  ┌──────────────────┐   ┌──────────────────┐
│ ACCEPTANCE   │→ │   EDGER UNIT     │ → │    OUTPUTS        │
│ INPUT AT     │  │   CUTS LENS      │   │   TO EDGE         │
│ KEYPAD       │  └──────────────────┘   │   CUTTER          │
└──────────────┘           │             └──────────────────┘
        ┌──────────────────┤
        ▼                  ▼
  ┌───────────┐      ┌─────────────┐
  │  EDGER    │      │   RETURN    │
  │  DRIVING  │      └─────────────┘
  │  FILE     │
  └───────────┘
```

FIG.3.

COMMUNICATION
LINK TO COMPUTER 1

START

BAR CODE READING

MICROPROCESSOR OF ENCODER UNIT 6 OR 7 RECEIVES CODE AND EMITS TRAY Nº

TRAY Nº DISPLAYED AT L.E.D. DISPLAY OF UNIT 6

KEYPAD ACCEPTANCE

ENCODER UNIT 6 OR 7 STARTS DIMENSIONAL SCANNING

OUTPUT TO PROBE MECHANISM (FIGURE 5)

PROBE INPUTS FROM SENSOR

COMPUTER 1 UPDATES MASS DATA STORAGE FILE

MASS DATA STORAGE FILE

RETURN

COMMUNICATION LINK TO COMPUTER 1

FIG.4.

5/6

FIG.5.

FIG.6.

FIG. 7.

**European Patent Office**

**EUROPEAN SEARCH REPORT**

Application number

EP 83 30 2045

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| P,Y | EP-A-0 061 918 (HOYA LENS)<br><br>* Page 10, lines 20-28; page 11; claims 1-3; figure 4 * | 1,4,10,13 | B 24 B 9/14<br>B 24 B 17/10<br>C 03 B 33/04<br>G 02 C 13/00<br>G 05 B 19/18<br>G 06 F 15/46 |
| Y | DE-A-2 934 658 (WILLEMIN MACHINES)<br>* Whole document * | 1,2,10 | |
| A | US-A-3 912 995 (A. SCHERMUND)<br><br>* Abstract; claims 1,4,7; figure 1 * | 1,8,10,11 | |
| A | FR-A-2 191 453 (R.R.M. ASSELIN et al.)<br><br>* Page 3, lines 8-28; claims 1,11-13; figures 1,5,6 * | 1,3-6,10,12,13 | **TECHNICAL FIELDS SEARCHED (Int. Cl. ³)** |
| A | US-A-4 217 736 (H. AKABA et al.)<br>* Whole document * | 1,5,10 | B 24 B<br>G 05 B<br>G 02 C<br>C 03 B<br>G 06 F |

The present search report has been drawn up for all claims

| Place of search | Date of completion of the search | Examiner |
|---|---|---|
| THE HAGUE | 22-07-1983 | SEIFERT H.U. |